**Europäisches Patentamt**

**European Patent Office**

**Office européen des brevets**

(11) Publication number: **0 155 826**
**B1**

(12) **EUROPEAN PATENT SPECIFICATION**

(45) Date of publication of patent specification: **19.12.90**

(21) Application number: **85301801.8**

(22) Date of filing: **15.03.85**

(51) Int. Cl.⁵: **G 01 N 25/18**

(54) **Heat exchanger performance monitors.**

(30) Priority: **23.03.84 US 592498**

(43) Date of publication of application:
**25.09.85 Bulletin 85/39**

(45) Publication of the grant of the patent:
**19.12.90 Bulletin 90/51**

(84) Designated Contracting States:
**DE FR GB IT**

(56) References cited:
**DE-A-2 830 729**
**GB-A-2 089 512**

**CHEMICAL ENGINEERING, March 22, 1982 MC GRAW-HILL PUBLICATION, K.J.VARGAS: "Trouble-Shooting Compression Refrigeration Systems", pages 137-143**

(73) Proprietor: **INTERNATIONAL CONTROL AUTOMATION FINANCE S.A.**
**16 Rue des Bains**
**Ville de Luxembourg (LU)**

(72) Inventor: **Kaya, Azmi**
**2365 Woodpark Road**
**Akron Ohio 44313 (US)**
Inventor: **Keyes, Marion Alvah**
**120 Riverstone Drive**
**Chagrin Falls Ohio 44022 (US)**

(74) Representative: **Cotter, Ivan John et al**
**D. YOUNG & CO. 10 Staple Inn**
**London WC1V 7RD (GB)**

Courier Press, Leamington Spa, England.

# EP 0 155 826 B1

**Description**

This invention relates to heat exchanger performance monitors. More specifically, the invention relates to a performance monitor for generating a fouling factor of a heat exchanger.

The performance of heat exchangers can be monitored. Such monitoring, however, requires extensive calculations which, hitherto, have been done using computers and high level programming languages. Such performance calculations have been disclosed in "Trouble-Shooting Compression Refrigeration Systems" by K. J. Vargas, *Chem. Engineering,* 22 March 1982.

In order to determine the performance capacity of a heat exchanger under various operating conditions, deviations of the heat exchanger from design conditions must be accounted for by these extended calculations.

Experimental data has also been used to determine heat exchanger performance, as described in "Controlling Chiller Tube Fouling" by G. Leitner, *ASHRAE Journal,* Feb. 1980. Such experimental data is not, however, always available.

Currently, computers are employed to determine the performance of heat exchangers in a prompt manner. The continuous availability of performance measurements helps in diagnosing several problems as they occur. However, computers require high level language and highly trained personnel. This results in high costs for monitoring the heat exchangers.

According to the present invention there is provided a heat exchanger performance monitor for generating a fouling factor indicative of the cleanliness of a heat exchanger having a heat exchange surface area for transferring heat between a medium which passes against one side of the heat exchange surface area and a heat exchange fluid which passes against an opposite side of the heat exchange surface area, the performance monitor comprising:

first temperature transmitter means for supplying a first signal corresponding to an output temperature of the medium exiting from the heat exchanger;

second temperature transmitter means for supplying a second signal corresponding to an input temperature of the medium entering the heat exchanger;

third temperature transmitter means for supplying a third signal corresponding to a temperature of the heat exchange fluid on the opposite side of the heat exchange surface area;

first mass flow rate means for supplying a fourth signal corresponding to a mass flow rate of the medium passing through the heat exchanger;

second mass flow rate means for supplying a fifth signal corresponding to a mass flow rate of the heat exchange fluid passing through the heat exchanger;

an actual heat transfer module connected to the first, second and third temperature transmitter means and to the second mass flow rate means for calculating a sixth signal corresponding to an actual heat transfer coefficient of the heat exchanger as a function of the first, second, third and fifth signals, the heat exchange surface area, and a specific heat value of the medium;

means for calculating a seventh signal corresponding to a nominal heat transfer coefficient of the heat exchanger; and

a divider unit connected to the actual heat transfer module and to the means for calculating the seventh signal, and being operable to calculate an eighth signal corresponding to a ratio of the nominal to actual heat transfer coefficients, which ratio corresponds to the fouling factor of the heat exchanger.

A preferred embodiment of the present invention described in detail hereinbelow provides a monitoring system or monitor which has equivalent performance to prior art computer monitoring systems while costing less and being faster in operation. Essentially, the advantages of an analog device as well as a computer are combined in the preferred monitor embodying the invention.

The preferred monitor comprises a plurality of individual function blocks which are structured and assembled to perform the same operations as a high cost computer.

The preferred heat exchanger performance monitor is simple in design, rugged in construction and economical to manufacture.

According to the preferred embodiment, there is provided a heat exchanger performance monitor which utilises a plurality of modules each including simple calculating units for obtaining a calculated value for an actual heat transfer coefficient and also a theoretical value for the nominal or original heat transfer coefficient value.

The invention is applicable to heat exchangers such as pre-coolers, air coolers, evaporators and condensers, and also to other devices having heat transfer surfaces such as boilers, for the purpose of determining fouling and slagging. The term "heat exchanger" is therefore to be construed broadly. A monitoring system or monitor embodying the invention can be used, for example, to determine when a soot blowing operation should be commenced in a boiler.

The invention will now be further described, by way of illustrative and non-limiting example, with reference to the accompanying drawings, in which:

Figure 1 is a schematic block diagram showing an evaporator as an example of a heat exchanger in combination with a performance monitor embodying the present invention;

Figure 2 is a block diagram showing fouling factor monitoring logic of the performance monitor for generating a signal corresponding to a fouling factor of the heat exchanger;

2

Figure 3 is a block diagram showing a water surface film module used in the circuit of Figure 2;

Figure 4 is a block diagram showing a refrigerant surface film module used in the circuit of Figure 2;

Figure 5 is a block diagram of an analytical heat transfer module used in the circuit of Figure 2; and

Figure 6 is block diagram of an actual heat transfer module used in the circuit of Figure 2.

The drawings illustrate one embodiment of performance monitor which is particularly useful in monitoring the extent of fouling in a heat exchanger and, in particular, an evaporator.

As noted above, one of the reasons for degraded performance of a heat exchanger is fouling. There are other reasons, such as lack of flow, which may reduce the heat transfer capability. The present monitor, however, isolates the effects of velocity to single out fouling as the cause of degraded heat transfer. The Heat Transfer equation is:

$$q = U.A. \Delta t_m \qquad (1)$$

where:

$q$ = heat flow (W or Btu/h),

$U$ = overall heat transfer coefficient (W/m².K or Btu/h.ft².°F),

$A$ = surface area (m² or ft²), and

$\Delta T_m$ = logarithmic mean temperature difference.

The measured (actual) value of $U_{act}$ is compared with its normal value to determine the extent of fouling. The actual value is found from measurements as:

$$U_{act} = q/(A. \Delta T_m) \qquad (2)$$

Each value on the right hand side of Equation (2) is measured or known.

In general, two different fluids (such as water and refrigerant) exchange heat. The change in mean temperature, $\Delta T_m$, is written as a function of $T_{hot}$ = medium input, $T_{cold}$ = medium output, $T'_{cold}$ = refrigerant (or heat transfer fluid) input and $T'_{hot}$ = refrigerant output.

The function is:

$$\Delta T_m = \frac{(T_{hot} - T'_{cold}) - (T'_{cold} - T'_{hot})}{\ln(\frac{T_{hot} - T'_{cold}}{T_{cold} - T'_{hot}})} \qquad (3)$$

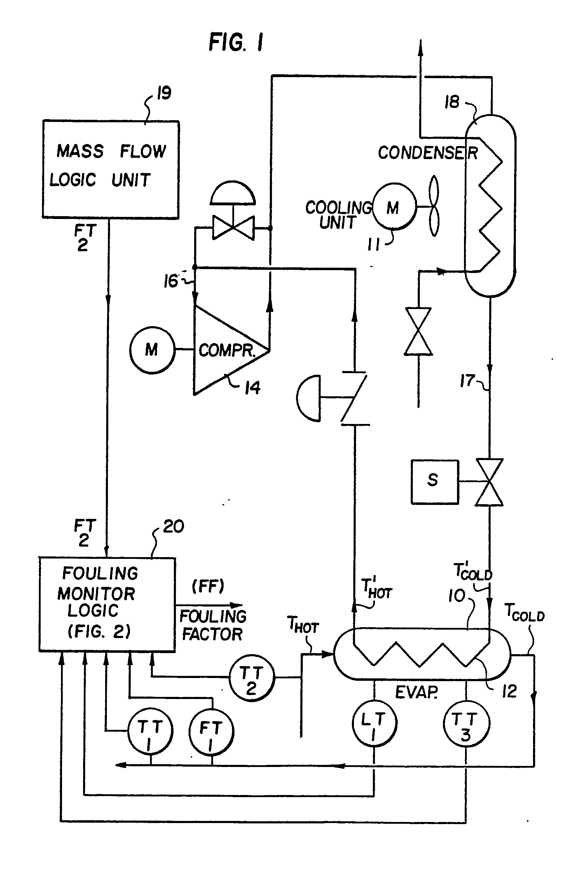

As shown in Figure 1, T refers to chilled water temperature and T' to refrigerant or fluid temperature where the heat exchanger is an evaporator and where water is the medium. T' may be constant and Equation (3) still applies. The value of q can be measured as the heat picked up by the water. The q value is found from measurements of $T_{cold}$, $T_{hot}$ and water mass flow rate $M_w$ as:

$$q = C_p M_w(T_{hot} - T_{cold}) \qquad (4)$$

where $C_p$ = the specific heat of water, which is known. The area of the heat exchanger is known as well.

The actual value of the heat exchanger coefficient ($U_{act}$) is found from the measurements by combining Equations (2) and (4). The original or nominal value ($U_{ava}$) of the heat transfer coefficient is found by calculating a given fluid velocity and temperature conditions. ASHRAE Guide Books give the relation for calculating U values. For an evaportor with chilled water inside the tubes, U is given by:

$$U = \frac{1}{\frac{1}{\varnothing_r h_r} + \frac{X}{K_t} \frac{A_o}{A_m} + \frac{A_o}{A_i}(\frac{1}{h_w} + r_f)} \qquad (5)$$

where:

$\varnothing_r$ = fin shape factor,

$h_w, h_r$ = film coefficients for water and refrigerant,

$X$ = wall thickness,

$K_t$ = thermal conductivity of the tube material,

$A_m$ = mean area,

$A_o, A_i$ = outside and inside areas, and

$r_f$ = fouling factor.

In case $U_{ava}$ is provided by the manufacture of the evaporator, Equation (5) should be checked against the manufacturer's value and should be corrected by a multiplication factor $K_f$ if needed.

The values of $h_r$, $h_w$ are velocity and temperature dependent and the K value may be temperature dependent. Therefore, these values should be calculated, and U should be updated in order to compare it with the experimental data.

A general formula for the h (film coefficient) value is given by:

$$h = C \frac{K}{d} \left(\frac{Md}{\mu}\right)^n \left(\frac{\mu C_p}{K}\right)^m \quad (6)$$

where:

d = tube diameter,
K = thermal conductivity of the fluid,
M = mass velocity ((g/s.m²) or lb/(s.ft²)),
μ = viscosity, and
m, n, C = constants.

The values of m, n, C depend upon the application or type of heat exchanger. Although the form of Equation (6) may differ in special cases such as viscous fluids, the same terms are used.

In the following development of U, $h_w$ and $h_r$ are treated as general non-linear functions of temperature and velocity. The corrections on nominal values of $h_r°$ and $h_w°$, due to the variations of the temperature and the velocity, are made.

The case of an evaporator monitor, as illustrated in Figures 1 to 6, will now be treated. The monitor is applied to a flooded evaporator 10 with water inside tubes shown schematically at 12. The refrigerant velocity will be small as compared with other types of evaporators. However, mass velocity of refrigerant can be taken from measurements of compressor inlet flow at an inlet 16 of a compressor 14 or it can directly be measured from an outlet 17 of a condenser 18. Here, the compressor measurements at its inlet 16 are utilised.

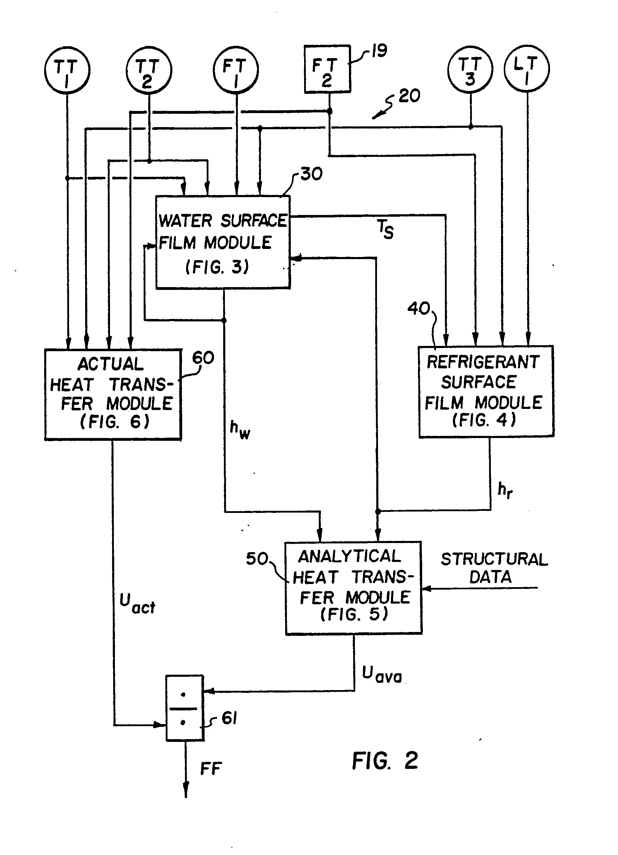

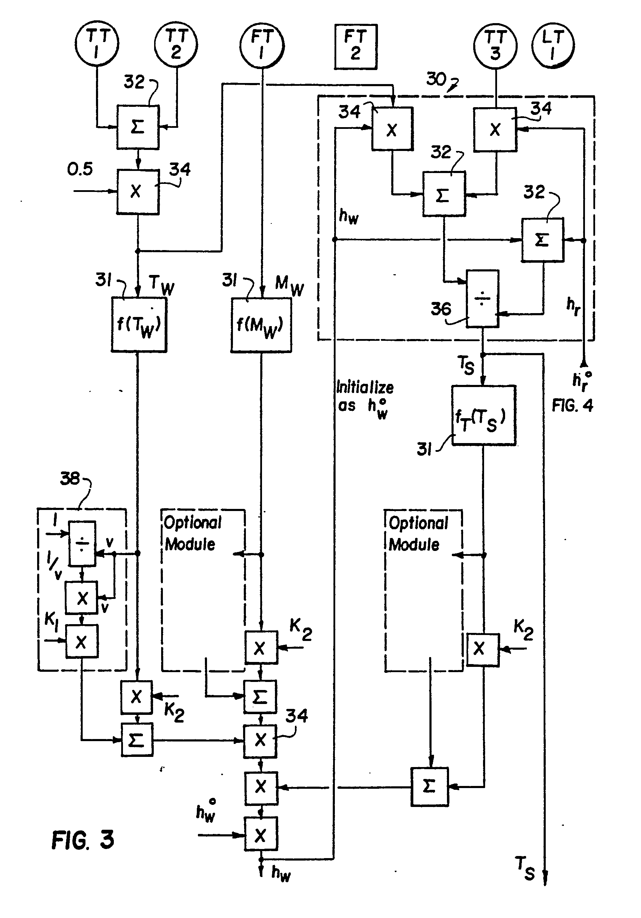

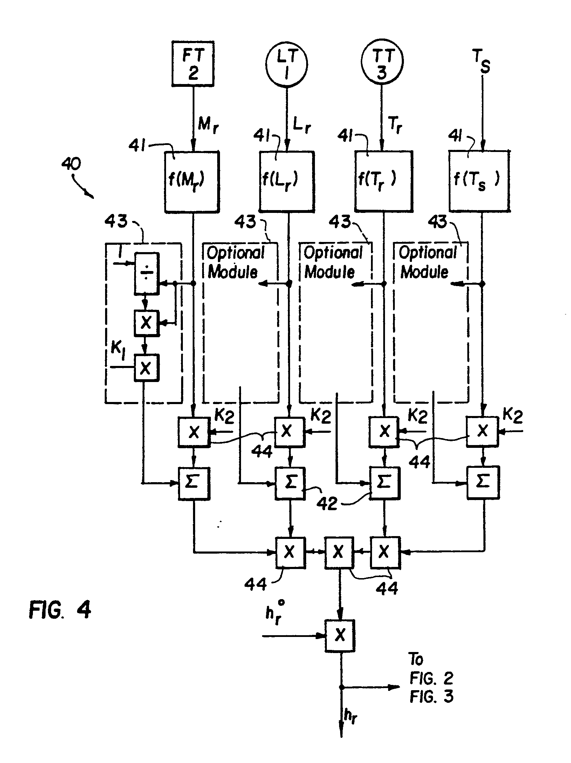

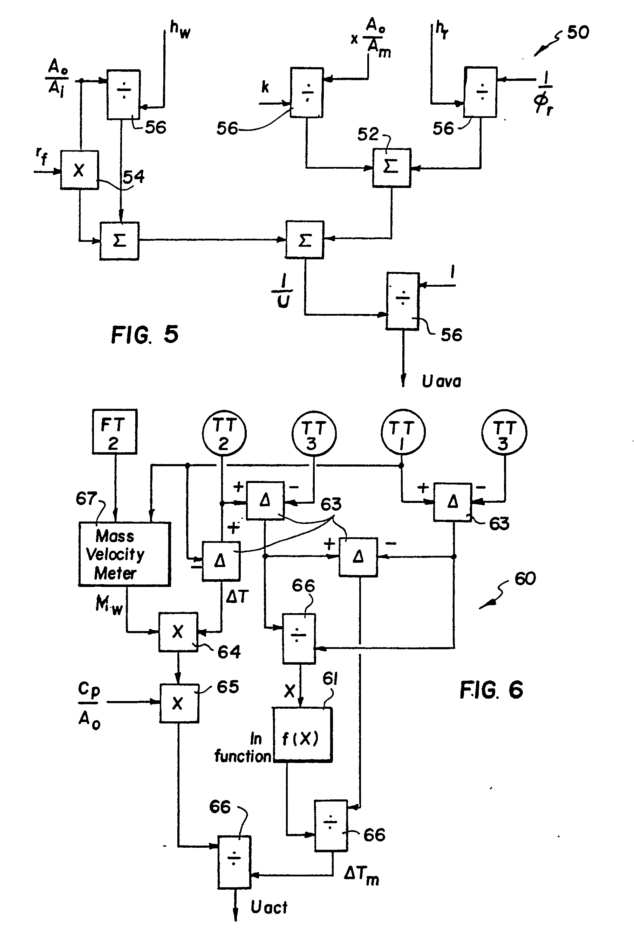

The evaporator system used with the evaporator monitor is shown in Figure 1. Fouling monitor logic 20 is shown in Figure 2 and includes four modules, namely a water surface film module 30, a refrigerant surface film module 40, an analytical heat transfer module 50, and an actual heat transfer module 60. Note that the values $h_w$ and $h_r$ are fed back into the water surface film module 30 (detailed in Figure 3) to calculate the surface temperature Ts of the tubes. Similarly, the refrigerant surface film module 40 of Figure 2 is shown in detail in Figure 4. The values $h_w$ and $h_r$ are fed into the analytical heat transfer module 50 (shown in detail in Figure 5) along with structural data to calculate the original or nominal value of heat transfer coefficient, $U_{ava}$, as in Equation (5). The actual value of heat transfer coefficient, $U_{act}$, is determined in the actual heat transfer module or unit 60 shown in detail in Figure 6. Going back to Figure 2, the fouling factor, FF, is determined as the ratio of actual and original values of U. Namely,

$$FF = \frac{U_{ava}}{U_{act}} \quad (7)$$

The value of FF gives an indication of the cleanliness of the heat transfer surfaces independently of the other variables.

This fouling monitor logic 20 is general and applies to other exchangers. The structures of Figures 3 and 4 determine $h_w$ and $h_r$ from Equation (6), respectively. In Figures 3 and 4, any of the optional modules 38, 43 can be energised to eliminate the effect of a particular variable by setting $K_1 = 1$ and $K_2 = 0$. Otherwise, the values are set at $K_1 = 0$ and $K_2 = 1$ to include the effect. The functions "f" in Figures 3 and 4 are generated by varying a particular variable in Equation (6). The method of generating the functions "f" is given below. The relationships for $h_w$ and $h_r$ in several heat exchanger applications are given in the ASHRAE Guide Books.

Consider $h_w$, given in Equation (6) a non-linear function of temperature and mass flow:

$$h_w = G(T_w, M_w, T_s) \quad (8)$$

where at nominal conditions the expression

$$h_w° = G(T_w°, M_w°, T_s°) \quad (9)$$

holds. Writing:

$$h_w = h_w° \frac{h_w}{h_w°} \quad (10)$$

where:

$$\frac{h_w}{h_w^\circ} = \left[\frac{(h_w)^{T_w}}{h_w^\circ}\right] \left[\frac{(h_w)^{M_w}}{h_w^\circ}\right] \left[\frac{(h_w)^{T_s}}{h_w^\circ}\right] \qquad (11)$$

$$\underbrace{\hspace{2cm}}_{f_1(T_w)} \qquad \underbrace{\hspace{2cm}}_{f_2(M_w)} \qquad \underbrace{\hspace{2cm}}_{f_3(T_s)}$$

The value of the numerator $f_1$ $(T_w)$ is determined from Equation (6) by calculating $h_w$ for various $T_w$ values while the other variables are held at their nominal values $M_w^\circ$ and $T_s^\circ$. The functions "f" are used in Figures 3 and 4.

Water cooled condensers and precoolers can also be monitored in the same way as the evaporator by the monitor embodying the invention. The heat transfer q can either be calculated by measuring condenser water parameters and using Equation (4) or using the refrigerant side measurements. In that case the q value for a condenser is written as:

$$q = M_r (h_{gas} - h_{liq}) \qquad (12)$$

where:

$M_r$ = refrigerant mass flow rate (g/h or lb/h),

$h_{gas}$ = enthalpy of refrigerant entering, and

$h_{liq}$ = enthalpy of refrigerant leaving.

For evaporative and air-cooled condensers it is better to use Equation (12) for q. For air-cooled condensers, water is replaced by air and the same equations apply. $\Delta T_m$ is calculated similarly.

For evaporative condensers, there is an intermediate fluid (water) between refrigerant and air. Determining $U_{act}$ is identical to the other cases. The average value of $\Delta T_m$ for refrigerant to water and $\Delta T_m$ for refrigerant to air is used as $\Delta T_m$.

For the analytical heat transfer coefficient, three surface film coefficients have to be calculated. Their calculations are covered in Equation (6). A modified relation over Equation (5) is:

$$U = \frac{1}{\frac{1}{\not{p}_r h_r} + \frac{X}{K} \cdot \frac{A_o}{A_m} + \frac{A_o}{A_i}\left(\frac{1}{h_w} + \frac{1}{h_a} + r_f\right)} \qquad (13)$$

where:

$h_a$ = film coefficient for air.

To avoid undue complication, manufacturer's data should be used if possible. The functional relations as in Equation (10) can be developed from the manufacturer's data in case the analytical calculations become impractical.

In greater detail, as shown in Figure 1, three temperature transmitters $TT_1$, $TT_2$ and $TT_3$ are associated with the evaporator 10. The temperature transmitter $TT_1$ measures the output temperature of the medium, in this case cold water, which has a temperature $T_{cold}$. The transmitter $TT_2$ measures the input temperature $T_{hot}$ of the water. The temperature transmitter $TT_3$ is used to measure the mean temperature in the evaporator 10. A single temperature value is used therefore for refrigerant input and output temperature in Equation (3). Added accuracy can be obtained by using different temperature transmitters for the input and output temperature of the refrigerant or other heat exchange fluid in another heat exchanger environment.

The flow $FT_2$ of refrigerant through the evaporator 10 is obtained from a mass flow logic unit 19 at the inlet 16 of the compressor 14 which is of known structure. The signal from $FT_2$ is applied to the fouling monitor logic 20.

The level of refrigerant in the evaporator 10 is measured by a level transmitter $LT_1$. This value is used in obtaining the original or nominal heat transfer coefficient value in the circuitry of Figure 4.

The mass flow rate of heat exchange medium is measured by a flow transmitter $FT_1$.

The refrigerant is supplied through the evaporator 10 by the compressor 14 in the refrigerant circuit. Controllable valves are shown, which are of known structure.

The refrigerant is supplied through the condenser 18 which is also cooled by a cooling unit 11, also of known design.

Figure 2 shows the fouling monitor logic 20 which forms the performance monitor embodying the invention.

The actual heat transfer module 60 is connected to the temperature transmitters $TT_1$, $TT_2$ and $TT_3$, as well as the mass flow logic unit 19. As shown in greater detail in Figure 6, the module 60 generates a value corresponding to the actual heat transfer coefficient $U_{act}$.

The original or nominal heat transfer coefficient $U_{ava}$ can be used as a known value or can be ascertained using the three modules 30, 40 and 50 shown in Figure 2 and detailed in Figures 3, 4 and 5, respectively.

The nominal or original heat transfer coefficient $U_{ava}$ is divided by the actual value, $U_{act}$, in a first divider unit 61 to generate the fouling factor FF as described in Equation (7).

Figure 3 shows the water surface film module 30 which uses simple functional units such as summing units 32, multiplication units 34 and a second dividing unit 36, as well as additional somewhat more complicated units, to generate the values $h_w$ and $T_s$ from Equation (6) by the use of Equation (6) and Equations (8) to (11). Optional modules 38 can be used to eliminate the effects of $T_w$, $M_w$ and $T_s$.

Function generators 31 are utilised to generate more complex functions, but are also of modular design. These function generators are utilised to generate the functions needed in Equation (11).

Figure 4 illustrates the refrigerant surface film module 40 for calculating $h_r$. Here again, function generators 41 are utilised for generating the various functions needed for example in Equation (11), as well as multipliers 44 and summing units 42. Optional modules 43, which are similar to the modules 38 of Figure 3, are also provided.

Figure 5 illustrates the analytical heat transfer module 50 which is connected to the water surface film module 30 and refrigerant surface film module 40, and is also made up of simple functional units such as summing units 52, a multiplier 54 and a divider unit 56. The module 50 implements Equation (5) to calculate the nominal or original heat transfer coefficient $U_{ava}$ as a function of $h_w$ and $h_r$, supplied from the units 30 and 40, respectively. The structural data as described in Equation (5) is also utilised.

Figure 6 illustrates the actual heat transfer module 60 which is used to run through Equations (2), (3), and (4) for calculating the actual heat transfer coefficient $U_{act}$. Difference units 63 obtain the various differences between the temperatures as supplied by the temperature transmitters $TT_1$, $TT_2$ and $TT_3$. A mass flow meter 67 (of known structure) supplies the mass flow rate $M_w$ to a multiplier 64, the output of which is multiplied, in a multiplier 65 by the ratio of the specific heat for the medium (in this case water) and the surface area of the heat exchange surface. A divider 66 is used in conjunction with the difference units to obtain the ratio whoe natural logarithm ln is taken in a function unit 61. Further dividers 66 are used to generate ultimately the $U_{act}$ value, according to the following equation derived by directly substituting Equations (3) and (4) into Equation (2):

$$U_{act} = \frac{C_p M_w (T_{hot} - T_{cold})}{A \cdot \left[ \dfrac{(T_{hot} - T'_{cold}) - (T_{cold} - T'_{hot})}{\ln \left( \dfrac{T_{hot} - T'_{cold}}{T_{cold} - T'_{hot}} \right)} \right]} \tag{14}$$

Since a single temperature is used for refrigerant input and output temperatures $T'_{hot}$ and $T'_{cold}$ as described above, let $T'_{hot} = T'_{cold} = T_r$. Simplifying Equation (14) yields:

$$U_{act} = \frac{C_p M_w (T_{hot} - T_{cold})}{A \cdot \left[ (T_{hot} - T_r) - (T_{cold} - T_r) \right]} \; \ln \left( \frac{T_{hot} - T_r}{T_{cold} - T_r} \right) \tag{15}$$

$$= \frac{C_p M_w}{A} \; \ln \left( \frac{T_{hot} - T_r}{T_{cold} - T_r} \right)$$

It is noted that the various modules and compartmentalised function and simple mathematic operational blocks can all be provided by a NETWORK 90 instrument. NETWORK 90 is a trademark of the Bailey Controls Company. The use of such a modular arrangement avoids the use of a computer with its associated high level programming language to achieve the same purpose. The monitoring purpose is also achieved more rapidly.

## Claims

1. A heat exchanger performance monitor for generating a fouling factor (FF) indicative of the cleanliness of a heat exchanger (10) having a heat exchange surface area for transferring heat between a medium which passes against one side of the heat exchange surface area and a heat exchange fluid which passes against an opposite side of the heat exchange surface area, the performance monitor comprising:

first temperature transmitter means ($TT_1$) for supplying a first signal corresponding to an output temperature ($T_{cold}$) of the medium exiting from the heat exchanger (10);

second temperature transmitter means ($TT_2$) for supplying a second signal corresponding to an input temperature ($T_{hot}$) of the medium entering the heat exchanger (10);

third temperature transmitter means ($TT_3$) for supplying a third signal corresponding to a temperature ($T_r$) of the heat exchange fluid on the opposite side of the heat exchange surface area;

first mass flow rate means ($FT_1$) for supplying a fourth signal corresponding to a mass flow rate ($M_w$) of the medium passing through the heat exchanger (10);

second mass flow rate means ($FT_2$) for supplying a fifth signal corresponding to a mass flow rate ($M_r$) of the heat exchange fluid passing through the heat exchanger (10);

an actual heat transfer module (60) connected to the first, second and third temperature transmitter means ($TT_1$, $TT_2$, $TT_3$) and to the second mass flow rate means ($FT_2$) for calculating a sixth signal corresponding to an actual heat transfer coefficient ($U_{act}$) of the heat exchanger (10) as a function of the first, second, third and fifth signals, the heat exchange surface area, and a specific heat value of the medium;

means (50) for calculating a seventh signal corresponding to a nominal heat transfer coefficient ($U_{ava}$) of the heat exchanger (10); and

a divider unit (61) connected to the actual heat transfer module (60) and to the means (50) for calculating the seventh signal, and being operable to calculate an eighth signal corresponding to a ratio of the nominal to actual heat transfer coefficients, which ratio corresponds to the fouling factor (FF) of the heat exchanger (10).

2. A heat exchanger performance monitor according to claim 1, wherein the means (50) for calculating the seventh signal comprises a medium surface film module (30) for calculating a film coefficient ($h_w$) of the medium as a function of the first, second and fourth signals corresponding to the output and input temperatures ($T_{cold}$, $T_{hot}$) and mass flow rate ($M_w$) of the medium, a heat exchange fluid surface film module (40) for calculating a film coefficient ($h_r$) for the heat exchange fluid as a function of the fifth signal, the third signal, a surface temperature ($T_s$) of tubes in the heat exchanger and a level of the heat exchange fluid in the heat exchanger, and an analytical heat transfer module (50) connected to the medium surface film module (30) and to the heat exchange fluid surface film module (40) for calculating the seventh signal corresponding to the nominal heat transfer coefficient ($U_{ava}$) as a function of the medium and fluid film coefficients ($h_w$, $h_r$) and of structural data of the heat exchanger.

3. A heat exchanger performance monitor according to claim 1 or claim 2, wherein said actual heat transfer module (60) comprises a plurality of difference units (63), a plurality of multiplication units (64, 65), a plurality of division units (66) and a natural logarithm function unit (61), all of said units being connected together to calculate the actual heat transfer coefficient ($U_{act}$) for the heat exchanger according to the function:

$$U_{act} = \frac{C_p M_w}{A} \, \ln \left( \frac{T_{hot} - T_r}{T_{cold} - T_r} \right)$$

where:

$C_p$ is the specific heat of the medium,

$M_w$ is the mass flow rate of the medium,

$T_{hot}$ is the input temperature of the medium,

$T_{cold}$ is the output temperature of the medium,

A is the heat exchange surface area, and

$T_r$ is the temperature of the heat exchange fluid on the opposite side of the heat exchange surface area.

4. A heat exchanger performance monitor according to claim 1, claim 2 or claim 3, wherein said medium is water.

5. A heat exchanger performance monitor according to any one of the preceding claims, wherein said heat exchange fluid is water.

6. A heat exchanger performance monitor according to any one of claims 1 to 5, wherein said heat exchanger (10) is a pre-cooler.

7. A heat exchanger performance monitor according to any one of claims 1 to 5, wherein said heat exchanger (10) is an air-cooler.

8. A heat exchanger performance monitor according to any one of claims 1 to 5, wherein said heat exchanger (10) is an evaporator.

9. A heat exchanger performance monitor according to any one of claims 1 to 5, wherein said heat exchanger (10) is a condenser.

## EP 0 155 826 B1

**Patentansprüche**

1. Überwachungsgerät für die Wirksamkeit eines Wärmetauschers zum Erzeugen eines Anwuchsfaktors (FF), welcher eine Anzeige für die Sauberkeit des Wärmetauschers (10) ist, mit einem Wärmetauscherflächenbereich zum Übertragen der Wärme zwischen einem Medium, welches an einer Seite des Wärmetauscherflächenbereiches vorbeistreicht, und mit einem Wärmetauschfluid, welches an der gegenüberliegenden Seite des Wärmetauscherflächenbereiches vorbeistreicht, wobei das Wirksamkeitsüberwachungsgerät aufweist:

eine erste Temperaturübermittlungseinrichtung ($TT_1$) für die Zufuhr eines ersten Signales, welches einer Ausgangstemperatur ($T_{cold}$), des Mediums entspricht, welches aus dem Wärmetauscher (10) austritt,

eine zweite Temperaturübertragungseinrichtung ($TT_2$) für die Zufuhr eines zweiten Signales, welches einer Eingangstemperatur ($T_{hot}$) des mediums entspricht, welches in den Wärmetauscher (10) eintritt,

eine dritte Temperaturübermittlungseinrichtung ($TT_3$) für die Zufuhr eines dritten Signals, welches einer Temperatur ($T_r$) des Wärmeaustauschfluids auf der gegenüberliegenden Seite des Wärmetauscheroberflächenbereiches entspricht,

eine erste Massenflußrateneinrichtung ($FT_1$) für die Zufuhr eines vierten Signals, welches der Massenflußrate ($M_w$) des Mediums entspricht, welches durch den Wärmetauscher (10) hindurchtritt,

eine zweite Massenflußrateneinrichtung ($FT_2$) für die Zufuhr eines fünften Signals, welches einer Massenflußrate ($M_r$) des Wärmeaustauschfluids entspricht, welches durch den Wärmetauscher (10) hindurchtritt,

einen Modul (60) für den tatsächlichen Wärmeübergang, welcher mit der ersten, zweiten und dritten Temperaturübermittlungseinrichtung ($TT_1$, $TT_2$, $TT_3$) und der zweiten Massenflußrateneinrichtung ($FT_2$) verbunden ist, um ein sechstes Signal zu berechnen, welches einem tatsächlichen Wärmeübertragungskoeffizienten ($U_{act}$) des Wärmetauschers (10) als Funktion der ersten, zweiten, dritten und fünften Signale, des Wärmeaustauscherflächenbereiches und des Wertes der spezifischen Wärme des Mediums entspricht,

eine Einrichtung (50) zum Berechnen eines siebten Signals, welches einem nominellen Wärmeübertragungskoeffizienten ($U_{ava}$) des Wärmetauschers (10) entspricht, und

eine Dividiereinheit (61), welche mit dem Modul (60) für den tatsächlichen Wärmeübergang und mit der Einrichtung (50) zum Berechnen des siebten Signales verbunden ist und so betreibbar ist, daß sie ein achtes Signal berechnet, welches einem Verhältnis des nominellen zum tatsächlichen Wärmeübertragungskoeffizienten entspricht, wobei dieses Verhältnis dem Anwuchsfaktor (fouling factor FF) des Wärmeauschers (10) enstpricht.

2. Überwachungsgerät für die Wirksamkeit eines Wärmetauschers nach Anspruch 1, wobei die Einrichtung zum Berechnen des siebten Signales einen Modul (30) für einen Oberflächenfilm des Mediums aufweist, um einen Filmkoeffizienten ($h_w$) des Mediums als Funktion des ersten, zweiten und vierten Signals zu berechnen, welcher den Ausgangs- und Eingangstemperaturen ($T_{cold}$, $T_{hot}$) und der Massenflußrate ($M_w$) des Mediums entspricht, einen Modul (40) für einen Oberflächenfilm des Wärmeaustauschfluids aufweist, um einen Filmkoeffizienten ($h_r$) für das Wärmeaustaschfluid als Funktion des fünften Signals, des dritten Signals, einer Oberflächentemperatur ($T_s$) von Rohren in dem Wärmetauscher und des Niveaus des Wärmeaustauschfluids in dem Wärmetauscher, und einen analytischen Wärmeübertragungsmodul (50) aufweist, welcher mit dem Modul (30) für den Oberflächenfilm des Mediums und mit dem Modul (40) für den Oberflächenfilm des Wärmeaustauschfluids verbunden ist, um das siebte Signal entsprechend dem nominellen Wärmeubertragungskoeffizienten ($U_{ava}$) als Funktion der Medium- und Fluidfilmkoeffizienten ($H_w$, $H_r$) und struktureller Daten des Wärmetauschers zu berechnen.

3. Überwachungsgerät für die Wirksamkeit eines Wärmetauschers nach Anspruch 1 oder 2, wobei der Modul (60) für den tatsächlichen Wärmeübergang eine Mehrzahl von Differenzeinheiten (63), eine Mehrzahl von Multipliziereinheiten (64, 65), eine Mehrzahl von Divisionseinheiten (66) und eine Einheit (61) für die Funktion das natürlichen Logarithmus aufweist, wobei alle diese Einheiten miteinander verbunden sind, um den tatsächlichen Wärmeübergangskoeffizienten ($U_{act}$) für den Wärmetauscher entsprechend der Funktion

$$U_{act} = \frac{C_p M_w}{A} \ln \left( \frac{T_{hot} - T_r}{T_{cold} - T_r} \right)$$

zu berechnen, wobei

$C_p$ die spezifische Wärme des Mediums ist,

$M_w$ die Massenflußrate des Mediums ist,

$T_{hot}$ die Eingangstemperatur des Mediums ist,

$T_{cold}$ die Ausgangstemperatur des Mediums ist,

A die Fläche der Wärmeaustauschoberfläche ist und

$T_r$ die Temperatur des Wärmeaustauschfluids auf der gegenüberliegenden Seite der Fläche der Wärmeaustauschoberfläche ist.

4. Überwachungsgerät für die Wirksamkeit eines Wärmetauschers nach Anspruch 1, 2 oder 3, wobei das Medium Wasser ist.

5. Überwachungsgerät für die Wirksamkeit eines Wärmetauschers nach einem der vorstehenden Ansprüche, wobei das Wärmeaustauschfluid Wasser ist.

6. Überwachungsgerät für die Wirksamkeit eines Wärmetauschers nach einem der Ansprüche 1 bis 5, wobei der Wärmetauscher (10) ein Vorkühler ist.

7. Überwachungsgerät für die Wirksamkeit eines Wärmetauschers nach einem der Ansprüche 1 bis 5, wobei der Wärmetauscher (10) ein Luftkühler ist.

8. Überwachungsgerät für die Wirksamkeit eines Wärmetauschers nach einem der Ansprüche 1 bis 5, wobei der Wärmetauscher (10) ein Verdampfer ist.

9. Überwachungsgerät für die Wirksamkeit eines Wärmetauschers nach einem der Ansprüche 1 bis 5, wobei der Wärmetauscher (10) ein Verflüssiger ist.

**Revendications**

1. Moniteur pour le contrôle des performances d'un échangeur de chaleur afin de produire un coefficient d'encrassement (FE) indicatif de la propreté d'un échangeur de chaleur (10) ayant une surface d'échange de chaleur pour transférer la chaleur entre un support qui presse contre un côté de la surface d'échange de chaleur et un fluide d'échange de chaleur qui passe contre le côté opposé de la surface d'échange de chaleur, le moniteur pour le contrôle des performances comprenant:

un premier moyen de transmetteur de température ($TT_1$) pour délivrer un premier signal correspondant à une température de sortie ($T_{froid}$) du support sortant de l'échangeur de chaleur de chaleur (10);

un deuxième moyen de transmetteur de température ($TT_2$) pour délivrer un deuxième signal correspondant à une température d'entrée ($T_{chaud}$) du support entrant dans l'échangeur de chaleur (10);

un troisième moyen de transmetteur de température ($TT_3$) pour délivrer un troisième signal correspondant à une température ($T_r$) du fluide d'échange de chaleur sur le côté opposé de la surface d'échange de chaleur;

un premier moyen de débit massique ($FT_1$) pour délivrer un quatrième signal correspondant à un débit massique ($M_w$) du milieu passant à travers l'échangeur de chaleur (10);

un deuxième moyen de débit massique ($FT_2$) pour délivrer un cinquième signal correspondant à un débit massique ($M_r$) du fluide d'échange de chaleur passant à travers l'échangeur de chaleur (10);

un module de transfert de chaleur effective (60) relié aux premier, deuxième et troisème moyens de transmetteur de température ($TT_1$, $TT_2$, $TT_3$) et au deuxième moyen de débit massique ($FT_2$] pour calculer un sixième signal correspondant à un coefficient de transfert de chaleur effective ($U_{eff}$) de l'échangeur de chaleur (10) comme une fonction des premier, deuxième, troisième et cinquième signaux, la surface d'échange de chaleur et une valeur de chaleur spécifique du support;

un moyen (50) pour calculer un septième signal correspondant à un coefficient de transfert de chaleur nominal ($U_{disp}$) de l'échangeur de chaleur (10), et

une unité de diviseur (61) reliée au module de transfert de chaleur effectif (60) et au moyen (50) pour calculer le septième signal et pouvant être commandée pour calculer un huitième signal correspondant à un rapport du coefficient nominal au coefficient de transfert de chaleur effectif, lequel rapport correspond au coefficient d'encrassement (FE) de l'échangeur de chaleur (10).

2. Moniteur pour le contrôle des performances d'un échangeur de chaleur selon la revendication 1, dans lequel le moyen (50) pour calculer le septième signal comprend un module pour film de surface de support (30) pour calculer un coefficient de film ($H_w$) du support comme une fonction des premier, deuxième et quatrième signaux correspondant aux tempértures d'entrée et de sortie ($T_{froid}$, $T_{chaud}$) et débit massique ($M_w$) du support, un module pour film de surface de fluide d'échange de chaleur (40) pour calculer un coefficient de film ($h_r$) pour le fluide d'échange de chaleur comme une fonction du cinquième signal, le troisième signal, une température de surface ($T_s$) des tubes dans léchangeur de chaleur et un niveau du fluide d'échange de chaleur dans l'échangeur de chaleur ainsi qu'un module de transfert de chaleur analytique (50) relié au module pour film de surface de support (30) et au module pour film de surface de fluide d'échange de chaleur (40) afin de calculer le septième signal correspondant au coefficient de transfert de chaleur nominal ($U_{disp}$) comme une fonction des coefficients de support et de film de fluide ($h_w$, $h_r$) et des données structurelles de l'échangeur de chaleur.

3. Moniteur pour le contrôle des performances d'un échangeur de chaleur selon la revendication 1 ou 2, dans lequel ledit module de transfert de chaleur effectif (60) comprend une pluralité d'unités de différence (63), une pluralité d'unités de multiplication (64, 65), une pluralité d'unités de diviseur (66) et une unité de fonction logarithmique naturelle (61), la totalité desdites unités étant interconnectée pour calculer le coefficient de transfert de chaleur effectif ($U_{eff}$) pour l'échangeur de chaleur selon la fonction:

$$U_{eff} = \frac{C_p M_w}{A} \ln \left(\frac{T_{chaud} - T_r}{T_{froid} - T_r}\right)$$

9

où:

C$_p$ est la chaleur spécifique du support,

M$_w$ est le débit massique du support,

T$_{chaud}$ est la température d'entrée du support,

T$_{froid}$ est la température de sortie du support,

A est la surface d'échange de chaleur, et

T$_r$ est la température du fluide déchange de chaleur sur le côté opposé de la surface d'échange de chaleur.

4. Moniteur pour le contrôle des performances d'un échangeur de chaleur selon la revendication 1, 2 ou 3, dans lequel ledit support est l'eau.

5. Moniteur pour le contrôle des performances d'un échangeur de chaleur selon l'une quelconque des revendications précédentes dans lequel ledit fluide d'échange de chaleur est l'eau.

6. Moniteur pour le contrôle des performances d'un échangeur de chaleur selon l'une quelconque des revendications 1 à 5, dans lequel ledit échangeur de chaleur (10) un pré-refroidisseur.

7. Moniteur pour le contrôle des performances d'un échangeur de chaleur selon l'une quelconque des revendications 1 à 5, dans lequel ledit échangeur de chaleur (10) est un refroidisseur d'air.

8. Moniteur pour le contrôle des performances d'un échangeur de chaleur selon l'une quelconque des revendications 1 à 5, dans lequel ledit échangeur de chaleur (10) est un évaporateur.

9. Moniteur pour le contrôle des performances d'un échangeur de chaleur selon l'une quelconque des revendications 1 à 5, dans lequel ledit échangeur de chaleur (10) est un condenseur.

## FIG. 1

FIG. 2

# EP 0 155 826 B1

FIG. 3

FIG. 4

3

FIG. 4

FIG. 5

FIG. 6